# EUROPEAN PATENT APPLICATION

(11) **EP 4 254 825 A1**
(43) Date of publication of application: **04.10.2023**
(21) Application number: 22166413.9
(22) Date of filing: 01.04.2022
(51) Int. Cl.: H04B 10/116, G02B 6/02, H04B 10/278, H04B 10/50, H04B 10/66, H04B 10/80

(54) **OPTICAL TRANSMITTER UNIT, OPTICAL RECEIVER UNIT AND OPTICAL TRANSCEIVER UNIT**

(71) Applicant: Microsoft Technology Licensing, LLC, Redmond, WA 98052-6399 (US)
(72) Inventor: COSTA, Paolo, Redmond, 98052-6399 (US); KARAGIANNIS, Thomas, Redmond, 98052-6399 (US); BALLANI, Hitesh, Redmond, 98052-6399 (US); SHI, Kai, Redmond, 98052-6399 (US); LYUTSAREV, Vassily, Redmond, 98052-6399 (US); GOMEZ DIAZ, Ariel, Redmond, 98052-6399 (US); SIEW, Shawn, Redmond, 98052-6399 (US)
(74) Representative: Page White Farrer

(57) **Abstract**

An optical transmitter (100T) includes an array (120) of light sources (122) to transmit visible light having a wavelength of from 580nm to 700nm along a respective core (51) of a multicore fibre optic cable (50) for receipt at a corresponding photodetector array (150) of an optical receiver unit (100R), and a controller (140) that receives data from a transmitting computer system (C) and encodes and transmits it by modulating the visible light output by the array (120) of light sources (122). An optical receiver unit (100R) includes a photodetector array (150) to receive the modulated visible light from the multicore fibre optic cable (50); and a controller (140) to receive the output of the photodetectors (152); decode data from the received output, and provide the decoded data to a receiving computer system (C). An optical transceiver unit (100) includes the optical transmitter (100T) and optical receiver (100R).

## Description

### Field

The present disclosure relates to an optical transmitter unit, optical receiver unit, and an optical transceiver unit.

### Background

Fibre-optic communications involve encoding data as pulses of light, which are transmitted through optical fibres from a transmitter to a receiver. Fibre-optic communication systems are used in a variety of contexts to transfer information, such as for telephone and internet communication, as well as for broadcasting television signals. Fibre optic communication systems are also widely used for intra-datacentre connectivity, where emerging workloads such as machine learning and resource disaggregation are significantly increasing network demands.

In conventional systems, precise alignment of the optical fibres with the light sources and light detectors is essential. Such systems are therefore costly to manufacture, requiring specialist packaging procedures. Further, costly light sources and receivers, such as single-mode and multi-mode lasers and silicon-germanium receivers are generally used. Given the cost involved with such components, these systems seek to maximise the data bandwidth that can be transmitted per lane (i.e. per transmitting component and receiving component), with example systems having a bandwidth of 50 to 100 Gbps per lane. This approach requires expensive and complex digital circuitry to modulate the light sources and process the received optical signals.

In existing systems using light sources in the visible light spectrum, a similar approach has been followed with complex coding schemes such as PAM4 (four level pulse-amplitude modulation) or OFDM (orthogonal frequency-division multiplexing) being employed to maximise the bandwidth offered per lane. Again, these systems require expensive and complex digital circuitry to encode and decode the signals. Further issues arise with chromatic dispersion of visible light signals, in which different colours of visible light travel at different rates through the fibre, potentially causing overlap or interference between signals. Higher speed transmission increases chromatic dispersion, which accordingly limits the distance over which signals can be transmitted.

It is an aim of the present disclosure to address the issues described above, and any other issues that would be apparent to the skilled reader from the disclosure herein.

### Summary

According to an aspect of the disclosure, there is provided an optical transmitter unit for connection to an optical receiver unit via a multicore fibre optic cable, the optical transmitter unit comprising: an array of light sources, each light source configured to transmit visible light along a respective core of the multicore fibre optic cable for receipt at a corresponding photodetector array of the optical receiver unit; and a controller configured to: receive data from a transmitting computer system, and encode and transmit the data by modulating the visible light output by the array of light sources.

The optical transmitter may comprise an optical filter configured to reduce chromatic dispersion.

A plurality of the light sources may each be configured to form a communication channel with a corresponding photodetector of the photodetector array of the optical receiver unit. The controller may be further configured to modulate the visible light output by the array of light sources to encode and transmit the data in parallel across a plurality of communication channels. The controller may be further configured to transmit control information over at least one communication channel in parallel with the data. The control information may include clock forwarding information, training sequence information or redundant information. The controller may be configured to encode the data using an on-off keying (OOK) coding scheme, for example a non-return-to-zero coding scheme.

Each light source may be configured to transmit visible light among a plurality of cores of the multicore fibre optic cable. Each communication channel may comprise by a plurality of cores of the multicore fibre optic cable.

Each light source may be configured to transmit visible light having a wavelength of from 500nm to 700nm. Each light source may be configured to transmit visible light having a wavelength of from 580nm to 700nm.

A maximum data transfer rate per communication channel may 10 Gbps or less, for example 5 Gbps or less. The transmitter unit may comprise at least 50 communication channels. The transmitter may comprise at least 25 or 75 or 100 communication channels. The array of light sources may include a plurality of light sources not used to form a communication channel.

The controller may comprise analogue circuitry to encode and transmit the data. The analogue circuitry may comprise an equaliser. The equaliser may be a feed forward equaliser.

The optical filter configured to reduce chromatic dispersion may comprise optical band-pass filter configured to narrow pulses of modulated light emitted by the light sources. The optical band-pass filter may have an optical bandwidth of less than 50nm, for example 10nm. A centre wavelength of the optical band-pass filter may match a centre wavelength of the light source.

The optical transmitter unit may comprise a lens unit configured to direct light emitted from the array of light sources into the cores of the multicore fibre optic cable. The lens unit may comprise a single axis of optical symmetry. The lens unit may comprise a first lens attached to the array of light sources. The lens unit may comprise a collimating lens configured to receive light from the first lens and separate the light into a plurality of parallel light beams. The lens unit may comprise a focusing lens configured to receive the plurality of parallel light beams from the collimating lens and focus the plurality of parallel light beams into the cores of the multicore fibre optic cable.

The optical transmitter unit may comprise a mechanical adapter to directly align cores of the multicore fibre optic cable with light sources of the light source array.

The array of light sources may comprise an array of micro-LEDs. The optical transmitter unit may comprise a plurality of LED drivers. The controller may encode and transmit the data by controlling the LED drivers to modulate the micro-LEDs.

The array of light sources may be disposed on a chiplet.

According to another aspect of the disclosure, there is provided an optical receiver unit for connection to an optical transmitter unit via a multicore fibre optic cable, the optical receiver unit comprising: a photodetector array, each photodetector in the photodetector array configured to receive modulated visible light from an array of light sources of the optical transmitter unit via a respective core of the multicore fibre optic cable; and a controller configured to: receive the output of the photodetectors; decode data from the received output, and provide the decoded data to a receiving computer system.

Each photodetector may be configured to form a communication channel with a corresponding light source. The controller may be further configured to decode data received in parallel across a plurality of communication channels. At least one communication channel may comprise control information received in parallel with the data, and the controller may be configured to decode the data based on the control information. The control information may include clock forwarding information, training sequence information or redundant information. The controller may be configured to decode the data using an on-off keying (OOK) coding scheme, for example a non-return-to-zero coding scheme.

The photodetector array may comprise a Complementary metal-oxide-semiconductor, CMOS, sensor. The photodetector array may be disposed on a chiplet.

The optical receiver unit may comprise an optical filter configured to reduce chromatic dispersion.

Each photodetector in the photodetector array may comprise a plurality of photodiodes. Each photodetector in the photodetector array may comprise a plurality of filters. The photodiodes may each be arranged to receive light from a respective one of the plurality of filters. The optical receiver unit may comprise a dispersive optical element, configured to separate the received modulated visible light into a plurality of optical signals based on wavelength; and direct each optical signal into a different one of the photodiodes via the corresponding filter. The optical filter configured to reduce chromatic dispersion may comprise the plurality of filters of the photodetectors and the dispersive optical element.

The optical receiver unit may comprise a combination circuit configured to combine output charges of the plurality of photodiodes of a photodetector in the photodetector array. The combination circuit may be configured to delay one of more of the output charges to compensate for differing receipt times of the plurality of optical signals.

The optical receiver unit may be configured to receive modulated visible light having a wavelength of from 580nm to 700nm.

According to another aspect of the disclosure, there is provided an optical transceiver unit for connection to another optical transceiver unit via a multicore fibre optic cable, the optical transceiver unit comprising: an array of light sources configured to transmit visible light along a respective core of the multicore fibre optic cable for receipt at a corresponding photodetector array of the optical receiver unit; a photodetector array, each photodetector in the photodetector array configured to receive modulated visible light representing from a respective core of the multicore fibre optic cable; and a controller configured to: receive first data from a computer system; and encode and transmit the first data by modulating the visible light output by the array of micro-LEDs; the controller further configured to: receive the output of the photodetectors; decode second data from the output, and provide the decoded second data to the computer system.

Further optional features of the optical transceiver unit are as defined herein with respect to the optical transmitter unit and the optical receiver unit, and may be combined in any combination.

The disclosure further extends to a kit of parts including an optical transmitter unit; an optical receiver unit and a multicore fibre optic cable. A system comprising the same components may also be provided. The disclosure also extends to a kit of parts comprising a pair of optical transceiver units and a multicore fibre optic cable. A system comprising the same components may also be provided.

The disclosure also extends to a method of transmitting data using an optical transmitter unit as defined herein, the method including receiving data from a transmitting computer system, and encoding and transmitting the data by controlling a plurality of LED drivers to modulate the visible light output by an array of micro-LEDs. The disclosure also extends to a method of receiving data using an optical receiver unit as defined herein, the method including receiving the output of a plurality of photodetectors of a photodetector array; decoding data from the received output, and providing the decoded data to a receiving computer system.

According to another aspect of the disclosure, there is provided an optical transceiver system, comprising: a multicore fibre optic cable; a transmitter unit comprising an array of micro light emitting diodes, micro-LEDs, each micro-LED configured to transmit visible light along the multicore fibre optic cable; a receiver unit comprising a photodetector array configured to receive the transmitted visible light; and a filtering unit disposed between the array of micro-LEDs and the photodetector array, the filtering unit configured to reduce chromatic dispersion. The filtering unit may comprise an optical band-pass filter configured to narrow pulses of modulated light emitted by the micro-LEDs.

According to another aspect of the disclosure, there is provided an optical receiver unit for connection to an optical transmitter unit via a multicore fibre optic cable, the optical receiver unit comprising: a photodetector array comprising a plurality of photodiodes configured to receive visible light from an array of micro light emitting diodes, micro-LEDs, of the optical transmitter unit via the multicore fibre optic cable, wherein each photodetector in the photodetector array comprises a plurality of filters and a plurality of corresponding photodiodes each arranged to receive light from a respective one of the plurality of filters; and a dispersive optical element configured to separate the received visible light into a plurality of optical signals based on wavelength, and direct each optical signal into a different one of the photodiodes via the corresponding filter.

According to another aspect of the disclosure, there is provided an optical transmitter unit for connection to an optical receiver unit via a multicore fibre optic cable, the optical transmitter unit comprising: an array of micro light emitting diodes, micro-LEDs, each micro-LED configured to transmit visible light along a respective core of the multicore fibre optic cable for receipt at a corresponding photodetector array of the optical receiver unit; and a lens unit configured to direct light emitted from the micro-LED array into the cores of the multicore fibre optic cable, the lens unit comprising a single axis of optical symmetry.

This summary is provided to introduce a selection of concepts in a simplified form that are further described below in the Detailed Description. This summary is not intended to identify key features or essential features of the claimed subject matter, nor is it intended to be used to limit the scope of the claimed subject matter. Nor is the claimed subject matter limited to implementations that solve any or all of the disadvantages noted herein.

### Brief description of the drawings

For a better understanding of the present invention and to show how the same may be carried into effect, reference will now be made by way of example only to the accompanying drawings, in which:
Figure 1 is a perspective view of an example optical transceiver system;
Figure 2A is a schematic cross section view of an example optical transceiver unit;
Figure 2B is a schematic plan view of an example optical transceiver unit;
Figure 3 is a schematic block diagram of an example optical transceiver unit;
Figure 4 is a schematic diagram of communication channels formed between a micro-LED array and photodetector array;
Figure 5A is a schematic diagram of an example filtering unit of an example optical transceiver system;
Figure 5B is a schematic diagram illustrating filtering of a light source;
Figure 6A is a schematic diagram of another example filtering unit of an example optical transceiver system;
Figure 6B is a schematic diagram illustrating filtering of a light source;
Figure 6C is a schematic timing diagram illustrating signals generated by photodiodes of a photodetector array;
Figure 6D is a schematic diagram illustrating filtering of an example combination circuit of the optical transceiver system of Figure 6A;
Figure 7A is a schematic diagram of an example lens unit of the optical transceiver system;
Figure 7B is a schematic diagram illustrating attachment of a first lens of the example lens unit of Figure 7A, and
Figure 8 is a schematic diagram of a mechanical adapter for directing light into a multicore fibre optic cable.

### Detailed Description

In overview, examples of the disclosure provide an optical transmitter unit which includes an array of micro light emitting diodes, micro-LEDs, which transmit modulated visible light along a multicore fibre optic cable. The modulated light is received by a photodetector array at a receiver unit. In some examples, a communication channel is formed between a micro-LED and a corresponding photodetector, and data is transmitted in parallel over a plurality communication channels. The data may be transmitted at a relatively low rate (e.g. 2Gbps) but over a relatively large number of channels (e.g. 100 or 200 channels). Transmitting at slower speeds but across a large number of parallel channels can enable the use of cost-effective commodity components such as CMOS sensors and polymer optical fibre (POF) cables, avoid the need for complex digital signal processing and ease issues with chromatic dispersion.

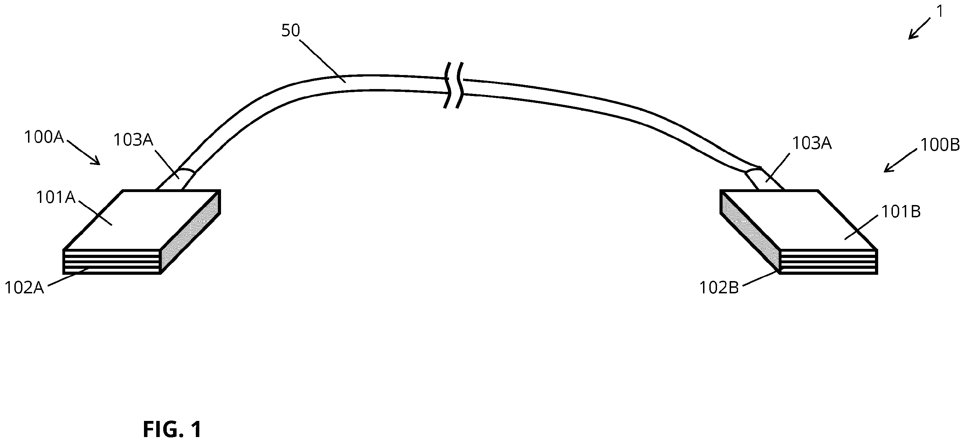

Figure 1 illustrates an optical transceiver system 1. The transceiver system 1 includes a first transceiver unit 100A, a second transceiver unit 100B, and a connecting cable 50 extending between the two transceiver units 100.

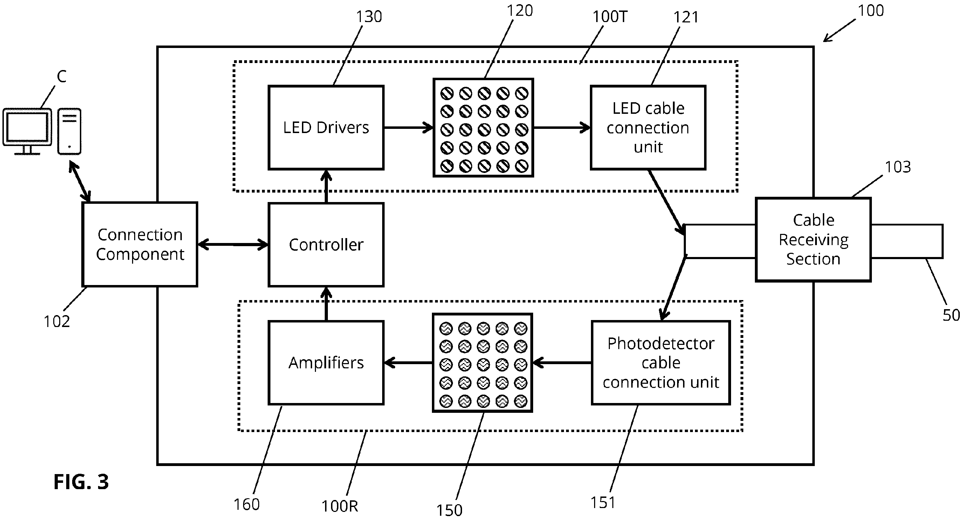

Each transceiver unit 100 is connectable to a respective computer system (C, see Figure 3) such as a datacentre server, so as to enable data transfer between the two computer systems via the connecting cable. In other examples, one or both of the transceiver units 100 may be connected to suitable networking hardware, such as a switch.

Each transceiver unit 100 includes a housing 101 which may retain the other components of the transceiver unit. A connection component 102 may be formed on an exterior of the housing 101, which may connect with a corresponding connection component of the computer system. The connection component 102 may form a detachable connection with the computer system, for example via a plug and socket type arrangement. Data may be provided to and from the computer system via the connection component 102.

Each transceiver unit 100 also comprises a cable receiving section 103 to which the connecting cable 50 is attached. The connection cable 50 may be attachable and detachable from the cable receiving section 103, for example to allow replacement of defective cables 50 or to allow the selection of cables of different lengths. In the example shown, the cable receiving section 103 is at the opposite end of the housing 101 to the connection component 102, but in other examples different configurations of the housing 101 are possible.

The transceiver units 100 are configured to transmit and receive data, as will be discussed in more detailed below. However, in other examples transmitter units that are configured to transmit data but not receive data may be provided. Likewise, in other examples receiver units that are configured to receive data but not transmit data may be provided.

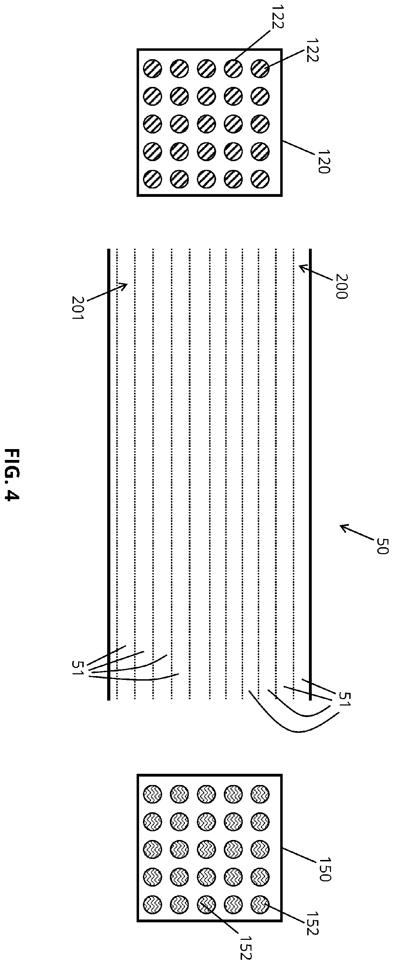

The cable 50 is a multicore fibre optic cable. Accordingly, the cable 50 comprises a plurality of optical fibre cores (51, see Figure 4) disposed therein. In one example, the cable 50 is a polymer optical fibre (POF) cable. In one example, the cable 50 comprises 200 cores. In other examples the cable 50 may comprise more than 200 cores.

In another example, the cable 50 is a multicore fibre optic cable comprising a bundle (i.e. a plurality of) imaging fibres. The bundle may comprise thousands or tens of thousands of imaging fibres. Each imaging fibre may be thin, for example under 100 microns or under 10 microns.

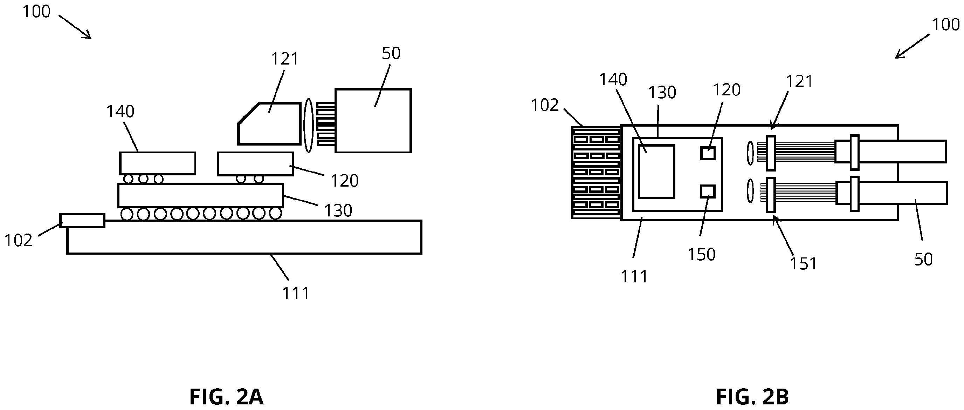

Figures 2A and 2B schematically illustrate the transceiver unit with the housing 101 removed. The transceiver unit 100 comprises a board (e.g. an interposer board) 111, upon which other components of the transceiver unit 100 are arranged, and which provides electrical connections between the components.

The connection component 102 is formed on one end of the interposer board 111, and may for example be integral thereto.

The transceiver unit 100 further comprises a micro-LED array 120. The micro-LED array 120 is electrically connected to a plurality of LED drivers 130 that drive the micro-LEDs in the micro-LED array 120. In one example, one driver 130 is provided per LED in the array 120.

The micro-LED array 120 is situated on top of the drivers 130 in the example shown. Accordingly, the drivers 130 are discrete and separate from the micro-LEDs. However, in other examples the drivers 130 may be co-packaged or stacked with the micro-LEDs. The drivers 130 drive the micro-LED array 120 to generate modulated visible light, which is transmitted along the cable 50.

The micro-LED array 120 is an example of an array of light sources configured to generate visible light. In other examples, other types of LEDs or vertical-cavity surface-emitting lasers (VCSELs) could be employed to generate visible light.

The transceiver unit 100 further comprises a photodetector array 150, which comprises a plurality of photodetectors. The photodetector array 150 may comprise an image sensor such as CMOS (Complementary metal-oxide-semiconductor) sensor, charge-coupled device (CCD) or the like. The photodetector array 150 receives modulated visible light from a micro-LED array 120 of another transceiver unit 100 via the cable 50, and generates electrical signals therefrom. Like the micro-LED array 120, the photodetector array 150 may be disposed on top of the drivers 130.

The transceiver unit 100 further comprises a controller 140. The controller 140 is configured to receive data from a computer system via the connection component 102. The controller 140 encodes and transmits the data along the cable 50, by controlling the LED drivers 130 to modulate the visible light output by the array of micro-LEDs 120.

The controller 140 is also configured to receive electrical signals from the photodetector array 150 and decode them. The decoded signals include data transmitted by another transceiver unit 100. The controller 140 then provides the data to the connected computer system via the connection component 102.

In one example, an on-off keying (OOK) coding scheme may be used to encode the data. In the OOK coding scheme, a simple two-level signal is employed, where a high value represents a binary "1" and a low value represents a binary "0". Alternatively, a high value may represent "0" and a low value may represent "1". For example, the OOK coding scheme may be a non-return-to-zero (NRZ) coding scheme. In NRZ, the emitted light may only have the high value or low value, with no other value representing a neutral or rest condition.

The controller 140 may include analogue circuitry for carrying out the encoding of the signals and/or controlling the LED drivers 130. The controller 140 may include analogue circuitry for decoding the electrical signals received from the photodetector array 150. In some examples, the controller 140 may not include any digital circuitry for processing signals.

For example, the controller 140 may comprise one or more equalizers implemented in analogue circuitry. The controller 140 may include a feed forward equaliser (FFE), which forms part of the analogue circuitry for carrying out the encoding of the signals or part of the analogue circuitry for decoding the signals. The controller 140 may include a decision feedback equaliser (DFE), which may form part of the analogue circuitry for decoding the signals.

The micro-LED array 120 may be optically connected to the cable 50 by an LED cable connection unit, generally indicated by reference number 121. The LED cable connection unit 121 may include one or more lenses for directing light emitted by the micro-LED array 120 into the cable 50 and/or one or more filters for filtering the emitted light. Lenses and filters of the cable connection unit 121 will be discussed in more detail below. The LED cable connection unit 121 may further comprise any suitable hardware for restraining and positioning the cable 50 or fibres thereof.

Similarly, the photodetector array 150 may be optically connected to the cable 50 by a photodetector cable connection unit 151. The connection unit 151 may include one or more lenses for directing light received via the cable 50 to the photodetector array 150 and/or one or more filters for filtering the received light. Lenses and filters of the cable connection unit 151 will be discussed in more detail below.

Figure 2B schematically illustrates two connection cables 50 - one connected to the micro-LED array 120 for transmitting signals and another connected to the photodetector array 150 for receiving signals. However, the transceiver units 100 may instead be connected by a single connection cable 50 having multiple cores or fibres, with some fibres or cores of the cable 50 being used for transmission and others used for receipt of signals by a transceiver unit 100.

Figure 3 schematically illustrates the example transceiver unit 100. In addition to the components described above, Figure 3 illustrates that a plurality of amplifiers 160 may be connected between the photodetector array 150 and the controller 140. The amplifiers 160 may amplify the output of the photodetector array 150, so that a usable voltage is provided to the controller 140. The amplifiers 160 may comprise a plurality of discrete transimpedance amplifiers (TIAs). In other examples, the amplifiers 160 may be integrated into the photodetector array 150. That is to say, the amplifiers 160 and photodetectors 150 may be disposed on the same die.

Figure 3 also illustrates that the transceiver unit 100 comprises a transmitter section 100T and a receiver section 100R. The controller 140 and the transmitter section 100T may form a transmitter unit. The controller 140 and the receiver section 100R may form a receiving unit. In some examples, one of the transmitter section 100T or receiver section 100R can be omitted so as to provide a device comprising only a receiving unit or only a transmitting unit. In such examples, the controller 140 may comprise circuitry to carry out only transmitting or only receiving.

In some examples, components of the transceiver unit 100 may be implemented as one or more chiplets. A chiplet is a small integrated circuit (i.e. a single die), which is designed to be combined with other chiplets on an interposer substrate to form a package. For example, the chiplets may communicate with one another using a suitable communication protocol, susuch as the Universal Chiplet Interconnect Express (UCIe) protocol.

Particularly, the transceiver unit 100 may comprise a first chiplet including the micro-LED array 120. The transceiver unit 100 may also comprise a second chiplet, which includes the photosensor array 120. The second chiplet may also include the amplifiers 160. In another example, the transceiver unit 100 comprises a chiplet including the micro-LED array 120 and photosensor array 120.

By disposing the some or all of the transmitter components or receiver components on chiplets, these aspects of the transceiver unit 100 are advantageously modular. This facilitates the easy construction of receiving units, transmitting units and transceiver units having various numbers of transmitter sections 100T and/or receiver sections 100R.

Turning now to Figure 4, the arrangement of channels provided by the micro-LED array 120 and photodetector array 150 is illustrated. Particularly, Figure 4 illustrates that the micro-LED array comprises a plurality of communication channels 200, wherein each communication channel 200 is formed between an LED 122 of the micro-LED array 150 and a photodetector 152. For simplicity in the Figure, only some of the communication channels 200, LEDs 122, photodetectors 152 and cores 51 are labelled.

In one example, each communication channel 200 corresponds to a single core 51 of the cable 50. That is to say that the LED 122 and corresponding photodetector 152 may communicate along exactly one core 51. However, in other examples, each communication channel 200 may comprise a plurality of cores 51. The cores 51 may receive light from a single LED 122, or a plurality of LEDs 122. For example, if cable 50 comprising imaging fibres is used, a plurality of the imaging fibres may be used per channel 200.

Accordingly, the number of available communication channels 200 provided is defined by the number of LEDs 122 and corresponding photodetectors 152. In the example shown, the micro-LED array is a 10x10 array and the photodetector array 150 is a 10x10 array. Accordingly, 100 communication channels 200 may be available between the micro-LED array 120 and photodetector array 150. In other examples, micro-LED arrays 120 and photodetector arrays 150 of other sizes may be provided, for example 20x20 or 30x30, to provide a larger number of communication channels.

In one example, the micro-LEDs 122 are configured to emit light at longer wavelengths in the visible spectrum. For example, the LEDs 122 may emit yellow or red light. In other words, visible light with a wavelength in the range of 580 to 700 nanometres (nm). In other examples, the wavelength range may be 500 to 700nm, The use of longer wavelength visible light may reduce chromatic dispersion.

The maximum data transfer rate over each communication channel 200 depends upon the speed at which the LEDs 122 are modulated by the controller 140. In one example, the maximum data transfer rate per channel 200 is 500 Megabits per second (Mbps). In another example, the maximum data transfer rate per channel 200 is 2 Gigabits per second (Gbps).

In other examples, the data transfer rate per channel 200 is under 10 Gbps, for example under 8 Gbps, under 7 Gbps, under 6 Gbps, under 5Gbps, under 4 Gbps or under 3Gbps. In one example, the micro-LED array 120 is a micro-LED array 120 manufactured by Lumiode, Inc or Lumileds Holding B.V, which can be modulated at a sufficiently high rate to enable the data transfer.

These maximum data transfer rates may be relatively slow compared to other optical transmission systems that employ laser light sources or complex coding schemes. However, the large number of available channels 200 allows the controller 140 to transmit data in parallel over a plurality of channels 200. For example, a transceiver system 1 with 100 channels 200 at a transfer rate of 2Gbps provides a bandwidth of 200Gbps. By providing larger arrays 120,150 or more cables 50, more bandwidth can be readily provided. The use of commodity components such as visible light micro-LEDs and CMOS photodetector arrays enables the cost-effective provision of a large number of channels 200.

One or more of the communication channels 200 may be control channels 201 used by the controller 140 to transmit control signals instead of data. For example, a control channel 201 may carry clock forwarding information, training sequence information, or redundant information. Similarly, the controller 140 may use control signals received over a control channel 201 to decode the received signals. For example, the controller 140 may use the control signals in clock data recovery, forward error correction or equalisation.

In one example, not all of the LEDs 122 and photodetectors 152 are used as communication channels 200. For example, it may be desirable to provide more LEDs 122 than are required for communication channels 200. This may be referred to as "overprovisioning" the LEDs 122. Accordingly, in the event of failure of an LED 122, another LED 122 can be used to form a replacement communication channel. The overprovisioning of the LEDs 122 may also assist in alignment of the LEDs 122 with the cores of the cable 50. For example, a misaligned LED 122 may not be used as a communication channel 200, in view of the large number of other available LEDs 122. In other examples, a plurality of LEDs 122 may be provided for use in a single communication channel 200. Accordingly, even if some of the plurality of LEDs 122 used for a communication channel 200 are misaligned or faulty, then other of the LEDs 122 allocated to that channel will be aligned and/or in proper working order.

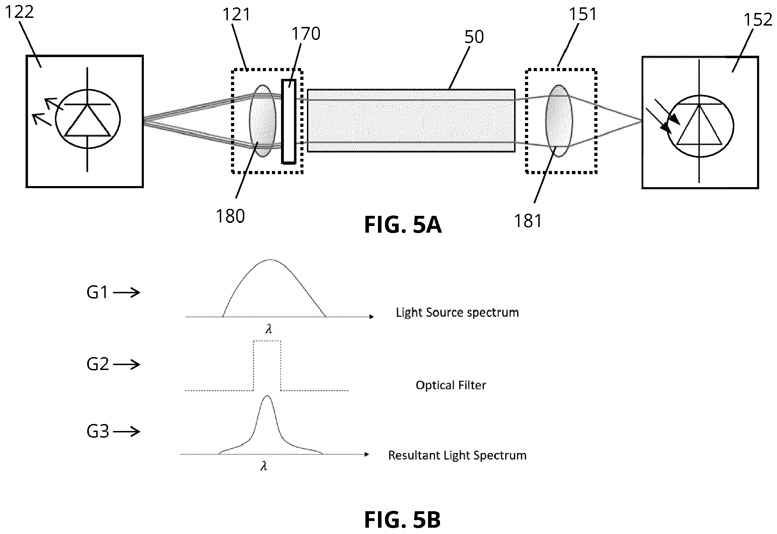

Figures 5A and 5B illustrate an example filtering unit 170 configured to filter light emitted from a micro-LED 122.

As discussed above, chromatic dispersion poses challenges in optical communication. Specifically, the bandwidth-distance product (i.e. how much data can be sent over what distance with a reasonable error rate) can be limited. This is because each wavelength of light moves at different speeds through the medium of the cores 51 of the cable 50, thereby broadening signal pulses as they travel along the cable 50. This may reduce the signal fidelity, and can be a particular issue with broad linewidth light sources including LEDs, and also with POF cables.

Figure 5A shows the filtering unit 170 positioned between the micro-LED 122 and the cable 50, for example as part of the LED cable connection unit 121. The LED cable connection unit 121 may additionally comprise a lens unit 180, for example disposed between the filter unit 170 and the micro-LED 122. In addition, the photodetector cable connection unit 151 may comprise another lens unit 181.

The filtering unit 170 comprises an optical filter, which reshapes a light pulse emitted by the micro-LED 122. The resultant line pulse may have a narrow linewidth, or a narrow full-width and half-maximum. The optical filter may be a band-pass filter.

Figure 5B illustrates the function of the filtering unit 170. The top graph G1 of Figure 5B illustrates a broad pulse emitted by the micro-LED 122. The middle graph G2 illustrates the spectral filtering provided by the filtering unit 170, which filters out light not falling within a particular wavelength range. The bottom graph G3 illustrates the broad pulse of graph G1 filtered by the filtering unit 170. The resultant pulse is significantly narrower than the pulse emitted by the micro-LED 122, and thus less susceptible to chromatic dispersion.

In one example, the band-pass filter has an optical bandwidth of 10nm. In other examples, the optical bandwidth may be wider or narrower, for example 5nm, 15nm, 20nm, 30nm, 40nm or 50nm. The centre wavelength of the optical filter may match the centre wavelength of the micro-LED 122.

Although Figure 5A illustrates the filtering unit 170 disposed after the lens unit 180, it will be appreciated that the filtering unit 170 may be disposed at other locations. For example, the filtering unit 170 may be before the lens unit. In other examples, the filtering unit may be located in the photodetector cable connection unit 151 or elsewhere in the receiver section 100R to filter light received from the cable 50.

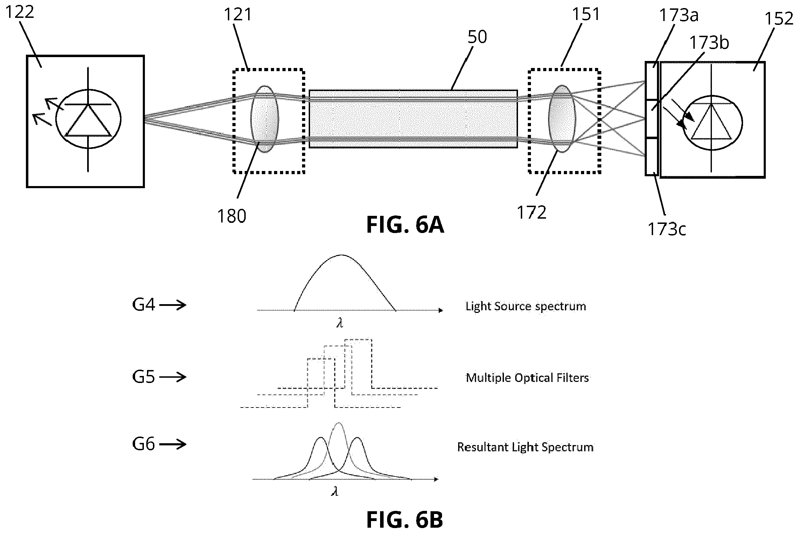

Figure 6A and 6B illustrates another filtering unit 170-1. The filtering unit 170-1 is situated between the cable and the photodetector 152, and includes a dispersive optical element 172 and a plurality of filters 173a,b,c.

The dispersive optical element 172 separates the received light by wavelength. In the example shown, the dispersive optical element 172 is a lens. However, one or more lenses, prisms or zone plates may be employed to separate the light.

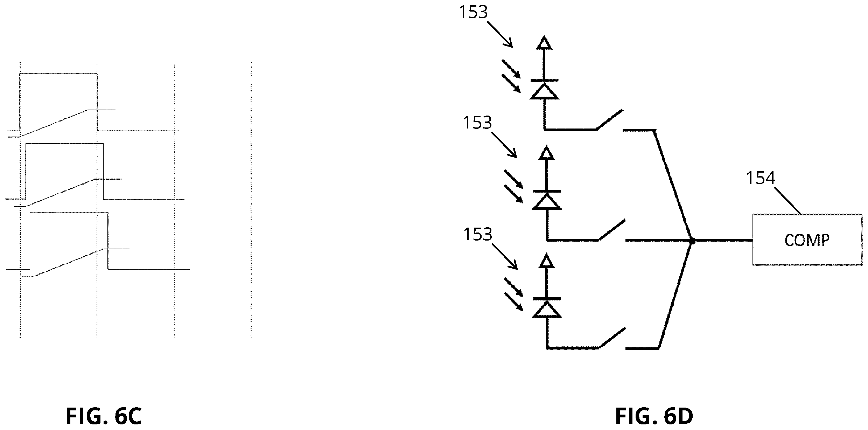

Each wavelength range of separated light is then directed to a different filter 173a,b,c. The filters 173 may take the form of filter coatings formed on the photodetector 152. In one example, the photodetector 152 comprises a plurality of photodiodes (153, see Figure 6C), each photodiode 153 corresponding to a filter 173. For example, the photodetector 152 may have red, green and blue photodiodes.

Figure 6B illustrates the function of the filtering unit 170-1. The top graph G4 illustrates that a broad pulse emitted by the micro-LED 122. The middle graph G5 illustrates that the dispersive optical element 172 and filters 173 disperses or filters the light into a plurality of wavelength ranges. The bottom graph G5 illustrates that broad pulse of graph G4 is filtered into the plurality of narrower wavelength ranges.

The filtering unit 170-1 separates out various wavelengths of light so that they can be separately detected by the photodetector 152. Accordingly, chromatic dispersion may be avoided or mitigated.

In the example shown, the light is dispersed into three wavelength ranges, which in turn are directed to three filter coatings 173. In other examples, the light may be dispersed into more or fewer wavelength ranges, for receipt at a corresponding number of filter coatings.

As noted above, different wavelengths of light will travel at different speed through the cable 50. Accordingly, a single pulse of light will result in the different separated wavelengths output from the dispersive optical element 172 arriving at their respective photodiodes 153 at different times. Figure 6C illustrates on a timing diagram the output of three photodiodes 153, which receive light at different times and thus generate an output at different times.

Figure 6D illustrates a combination circuit 154 to combine the signals received at different photodiodes 153 of a photosensor 152. The circuit 154 combines the output charges from the photodiodes 153 with a deterministic timing delay, for example using transistors.

For example, it may be known that light having a certain wavelength will have a certain delay when traversing a particular cable 50. For example, there may be a delay of approximately 150ns for 450nm-455nm light traversing through 30m of plastic PMMA. Similar known delays may be calculated for other wavelengths of light. Accordingly, the circuit 154 may delay the output charges received from the photodiodes 153, so as to resynchronise them and provide a summed or compared output.

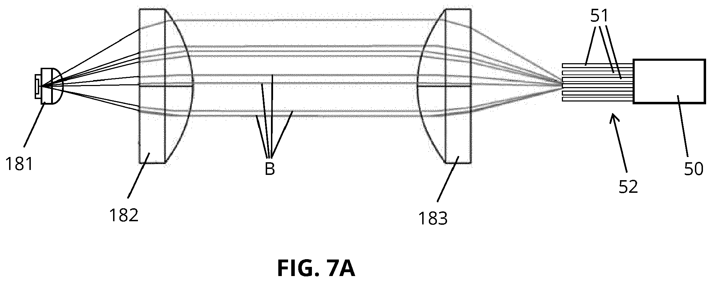

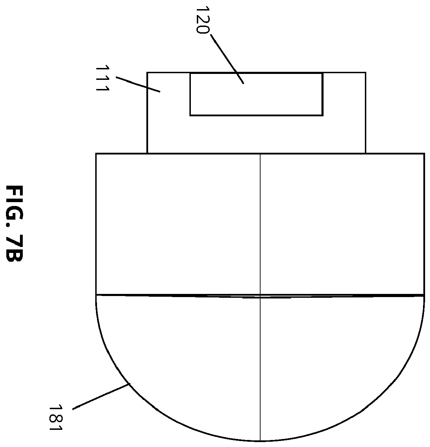

Figure 7A and B illustrate an example lens unit 180. The lens unit 180 is configured to direct light emitted from the micro-LED array 120 into the cores 51 of the cable 50, via waveguides 52.

In some examples, an array of micro-lenses is used to focus the output of each of the LEDs 122 of the micro-LED array 120. In such examples, each micro-lens in the array has its own axis of symmetry. In other words, there is one optical axis of symmetry per lens, such that the micro-lens array has a plurality of axes of optical symmetry. However, micro-lens arrays may require precise alignment, and may be costly to manufacture. In contrast, the lens unit 180 provides a single optical axis of symmetry for the micro-LED array 120.

The lens unit 180 comprises a first lens 181, which receives light from the micro-LED array 120. In other words, the lens unit 180 comprises a single lens 181 with a single optical axis of symmetry, which receives light from all of the micro-LEDs 122.

As illustrated in Figure 7B, the lens 181 may be attached to the micro-LED array 122. For example, the lens 181 is bonded to the interposer 111 or another substrate supporting the micro-LED array 122. This allows the lens 181 to capture substantially all of the light from the micro-LED array 122 whilst minimising total internal reflection losses.

The lens unit 180 further comprises a collimating lens 182, which receives light from the first lens 181 and separates the received light into a plurality of parallel beams B. Each beam corresponds to the output of a separate micro-LED 122, and therefore represents a separate channel 200.

The lens unit 180 further comprises a focusing lens 183, which receives the parallel light beams from the collimating lens 182 and focuses them onto the waveguides 52 of the cable.

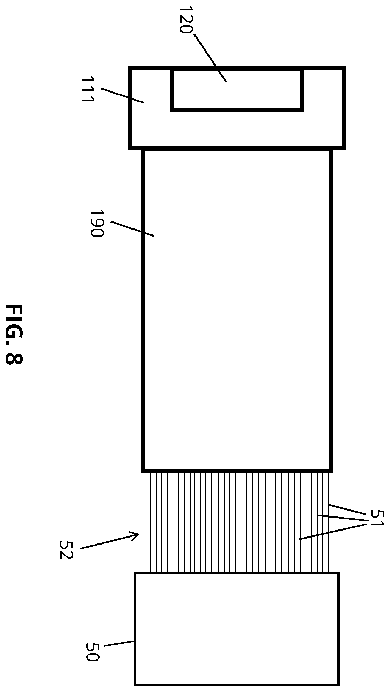

Figure 8 schematically illustrates another example mechanism for directing light emitted from the micro-LED array 120 into the cores 51 of the cable 50. In Figure 8, a mechanical adapter 190 receives the cores 51 or corresponding waveguides 52 of the cable 50. The mechanical adapter 190 directly aligns each waveguide 52 with a respective micro-LED 122. In other words, the mechanical adapter 190 retains the cores 51 so that no intervening lens is required to direct the light emitted by a micro-LED 122 into a core 51.

The systems described herein may allow the use of commodity electronics components in optical communication. The use of such components enables the cost-effective provision of a plurality of parallel data transmission channels, and allows redundancy to be built into the transmitter. The systems described herein avoid the need for complex coding schemes and associated digital signal processing hardware. Furthermore, the systems described herein provide cost effective methods of mitigating chromatic dispersion, enabling the provision of high bandwidth communication over longer distances.

It will be understood that the controller or processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware). It will be understood that the controller described herein may include both digital and analogue circuitry. References to particular functionality being provided by analogue circuitry does not exclude the possibility of the controller carrying out other functions using digital circuitry.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An optical transmitter unit (100T) for connection to an optical receiver unit (100R) via a multicore fibre optic cable (50), the optical transmitter unit (100T) comprising:
an array (120) of light sources (122), each light source (122) configured to transmit visible light having a wavelength of from 580nm to 700nm along a respective core (51) of the multicore fibre optic cable (50) for receipt at a corresponding photodetector array (150) of the optical receiver unit (100R); and
a controller (140) configured to:
receive data from a transmitting computer system (C), and
encode and transmit the data by modulating the visible light output by the array (120) of light sources (122).

2. The optical transmitter unit (100T) of claim 1, wherein:
a plurality of the light sources (122) are each configured to form a communication channel (200) with a corresponding photodetector (152) of the photodetector array (150) of the optical receiver unit (100R); and
the controller (140) is further configured to modulate the visible light output by the array (120) of light sources (122) to encode and transmit the data in parallel across a plurality of communication channels (200), optionally wherein the controller (140) is further configured to transmit control information over at least one communication channel (201) in parallel with the data.

3. The optical transmitter unit (100T) of claim 2, wherein a maximum data transfer rate per communication channel (200) is 5 Gbps or less and/or the optical transmitter unit (100T) comprises at least 50 communication channels (200).

4. The optical transmitter unit (100R) of claims 2 or 3, wherein the array (120) of light sources (122) includes a plurality of light sources (122) not used to form a communication channel (200).

5. The optical transmitter unit (100T) of any preceding claim, wherein the controller (140) comprises analogue circuitry to encode and transmit the data.

6. The optical transmitter unit (100T) of any preceding claim, comprising an optical band-pass filter (170) configured to narrow pulses of modulated light emitted by the light sources (122).

7. The optical transmitter unit (100T) of any preceding claim, comprising a lens unit (180) configured to direct light emitted from the array (120) of light sources (122) into the cores (51) of the multicore fibre optic cable (50), the lens unit (180) comprising a single axis of optical symmetry, the lens unit (180) optionally comprising:
a first lens (181) attached to the array (120) of light sources (122);
a collimating lens (182) configured to receive light from the first lens (181) and separate the light into a plurality of parallel light beams (B);
a focusing lens (183) configured to receive the plurality of parallel light beams (B) from the collimating lens (182) and focus the plurality of parallel light beams (B) into the cores (51) of the multicore fibre optic cable (50).

8. The optical transmitter unit (100T) of any of claims 1 to 6, comprising a mechanical adapter (190) to directly align cores (51) of the multicore fibre optic cable (50) with light sources (122) of the light source array (120).

9. The optical transmitter (100T) of any preceding claim, wherein the array (120) of light sources (122) is an array of micro-LEDs

10. The optical transmitter (100T) of any preceding claim, wherein the array (120) of light sources (122) is disposed on a chiplet.

11. An optical receiver unit (100R) for connection to an optical transmitter unit (100T) via a multicore fibre optic cable (50), the optical receiver unit (100R) comprising:
a photodetector array (150), each photodetector (152) in the photodetector array (150) configured to receive modulated visible light having a wavelength of from 580nm to 700nm from an array (120) of light sources (122) of the optical transmitter unit (100T) via a respective core (51) of the multicore fibre optic cable (50); and
a controller (140) configured to:
receive the output of the photodetectors (152);
decode data from the received output, and
provide the decoded data to a receiving computer system (C).

12. The optical receiver unit (100R) of claim 11, wherein:
each photodetector (152) is configured to form a communication channel (200) with a corresponding light source (122); and
the controller (140) is further configured to decode data received in parallel across a plurality of communication channels (200), optionally wherein at least one communication channel (201) comprises control information received in parallel with the data, and the controller (140) is configured to decode the data based on the control information.

13. The optical receiver unit (100R) of claims 11 or 12, wherein the photodetector array (150) comprises a Complementary metal-oxide-semiconductor, CMOS, sensor optionally disposed on a chiplet.

14. The optical receiver unit (100R) of any of claims 11 to 13, wherein:
each photodetector (152) in the photodetector array (150) comprises a plurality of filters (173a, 173b, 173c) and a plurality of corresponding photodiodes (153) each arranged to receive light from a respective one of the plurality of filters (173a, 173b, 173c), and
the optical receiver unit (100R) further comprises a dispersive optical element (172), configured to:
separate the received modulated visible light into a plurality of optical signals based on wavelength; and
direct each optical signal into a different one of the photodiodes (153) via the corresponding filter (173a, 173b, 173c),
wherein the optical receiver unit (100R) optionally further comprises a combination circuit (154) configured to combine output charges of the plurality of photodiodes (153) of a photodetector (152) in the photodetector array,
wherein the combination circuit (154) is configured to delay one of more of the output charges to compensate for differing receipt times of the plurality of optical signals.

15. An optical transceiver unit (100) for connection to another optical transceiver unit (100) via a multicore fibre optic cable (50), the optical transceiver unit (100) comprising:
an array (120) of light sources (122) configured to transmit visible light having a wavelength of from 580nm to 700nm along a respective core (51) of the multicore fibre optic cable (50) for receipt at a corresponding photodetector array (150) of the other optical transceiver unit;
a photodetector array (150), each photodetector (152) in the photodetector array configured to receive modulated visible light from a respective core (51) of the multicore fibre optic cable (50); and
a controller (140) configured to:
receive first data from a computer system (C); and
encode and transmit the first data by modulating the visible light output by the array (120) of light sources (122);
the controller (140) further configured to:
receive the output of the photodetectors (152);
decode second data from the output, and
provide the decoded second data to the computer system (C).
